# EUROPÄISCHE PATENTSCHRIFT

(11) **EP 2 962 353 B1**
(45) Veröffentlichungstag und Bekanntmachung des Hinweises auf die Patenterteilung: **25.07.2018**
(21) Anmeldenummer: 14708211.9
(22) Anmeldetag: 20.02.2014
(51) Int. Cl.: H01M 8/04007, H01M 8/2475, H01M 8/241, H01M 8/249, H01M 8/2483

(54) **BRENNSTOFFZELLENSYSTEM**
FUEL CELL SYSTEM
SYSTÈME DE PILES À COMBUSTIBLE

(30) Priorität: 27.02.2013 DE 102013203319
(43) Veröffentlichungstag der Anmeldung: 06.01.2016
(73) Patentinhaber: Bayerische Motoren Werke Aktiengesellschaft, 80809 München (DE)
(72) Erfinder: HAASE, Stefan, 85247 Schwabhausen (DE); SCHMID, Johannes, 81375 München (DE)
(86) Internationale Anmeldenummer: PCT/EP2014/053370
(87) Internationale Veröffentlichungsnummer: WO 2014/131693

(56) Entgegenhaltungen:
- DE-A1- 10 049 801
- DE-A1-102008 019 981
- DE-A1-102009 022 946
- KR-A- 20110 060 079
- US-A- 4 342 816
- US-A1- 2005 164 061
- US-A1- 2007 178 358
- US-A1- 2010 086 810

## Beschreibung

Die Erfindung betrifft ein Brennstoffzellensystem mit mehreren zu einem Stapel zusammengefassten Einzelbrennstoffzellen mit Bipolarplatten und abseits der chemisch aktiven Flächen der Einzelbrennstoffzellen vorgesehenen Kanälen für die Zuführung der Reaktanten und Abführung der Reaktionsprodukte zu/von den Einzelbrennstoffzellen sowie mit einem ein Kühlfluid für die Einzelbrennstoffzellen führenden Kühlkanal, wobei der Stapel in einem Gehäuse untergebracht ist.

Die Druckschriften US 4,342,816 A1, US 2010/0086810 A1, DE 100 49 801 A1, KR 2011 0060079 A und DE 10 2008 019981 A1 sind Stand der Technik. Brennstoffzellensysteme realisieren insbesondere durch den Einsatz von Katalysatoren bestehend aus Platin bzw. Platin enthaltenden Legierungen hohe Leistungsdichten, was eine Kühlung der Einzelbrennstoffzellen bedingt. Hierfür sind üblicherweise Kühlplatten vorgesehen, in denen im Zusammenwirken mit zur Erzeugung eines geeigneten Flussfelds profilierten Bipolarplatten ein Kühlfluid (auch Kühlmittel oder Wärmeträgermittel genannt) über die Ebenen der jeweiligen Einzelbrennstoffzellen geführt wird. An die aufeinander gestapelten Einzelbrennstoffzellen wird das Kühlfluid ebenso wie die Reaktanten und Reaktionsprodukte dieser Einzelbrennstoffzellen jeweils über einen sich in der Regel senkrecht zu den Ebenen der Einzelbrennstoffzellen bzw. deren Bipolarplatten erstreckenden Kanal herangeführt bzw. abgeführt, wobei diese Kanäle üblicherweise am Randbereich der Einzelbrennstoffzellen liegen, d.h. abseits und üblicherweise außerhalb des chemisch aktiven Bereichs der Einzelbrennstoffzellen verlaufen. Dabei sind die Wände dieser Kanäle dieser Kanäle von den einzelnen Bipolarplatten und weiteren aufeinander gestapelten Elementen des Brennstoffzellstacks, bei welchem es sich insbesondere auch um eine Vielzahl von Dichtungen bzw. Dichtsystemen handelt, gebildet, d.h. in den Randbereichen der einzelnen Bipolarplatten sind Durchbrüche vorgesehen, welche zusammen mit zwischen den übereinander gestapelten Bipolarplatten liegenden Dichtungen etc. die besagten Kanäle bilden. Dies führt zu einem ziemlich komplexen Aufbau eines Brennstoffzellen-Stapels (= "Stacks").

Um eine jedenfalls während der Aufheizphase der Brennstoffzellen unerwünschte Wärmeabfuhr über die Endplatten des Stacks zu verhindern, sind üblicherweise zusätzliche Isolatorplatten vorgesehen. Ebenfalls üblicherweise stellt ein Gehäuse, in welchem die zu einem Stapel zusammengefassten Einzelbrennstoffzellen untergebracht sind, ein separates Bauteil dar, welches im wesentlichen nur zum Schutz vor Verschmutzung und Berührung und im Falle, dass das Brennstoffzellensystem in einem Fahrzeug verbaut ist, der Crashsicherheit dient.

Üblicherweise werden beim Herstellungsprozess eines Brennstoffzellen-Stapels dessen Einzelkomponenten auf eine der beiden Endplatten des Stapels, die mit geeigneten Führungen versehen ist, gestapelt. Dazu müssen vorab diese Führungen an einer der Endplatten angebracht werden; danach können über diese Führungen die Einzelkomponenten des Stapels aufeinander gelegt und geeignet positioniert werden. Anschließend können diese Führungen wieder entfernt werden.

Ausgehend von diesem Stand der Technik ist es Aufgabe der vorliegenden Erfindung, ein Brennstoffzellensystem der eingangs genannten Art zu schaffen, welches sich durch einen demgegenüber vereinfachten Aufbau auszeichnet.

Eine erste Lösung dieser Aufgabe ergibt sich mit den Merkmalen des Anspruchs 1, wonach zumindest einer der besagten Kanäle (für Reaktanten oder Reaktionsprodukte oder Kühlmittel) durch das Gehäuse selbst bzw. dessen Innenwand im Zusammenwirken mit dem Brennstoffzellen-Stapel, d.h. den übereinander gestapelten Einzelbrennstoffzellen gebildet wird. Um dabei sicherzustellen, dass das im jeweiligen Kanal geführte Medium in ausreichendem Umfang zur jeweiligen Brennstoffzelle gelangt, ragen zumindest einige der Bipolarplatten des Stapels mit ihrem Endabschnitt über eine gewisse, vorzugsweise geringe Strecke in den Kanal hinein, wobei selbstverständlich ein ausreichender Strömungsquerschnitt im so gebildeten Kanal erhalten bleiben muss. Infolge der erfindungsgemäßen Ausgestaltung dient das Gehäuse gleichzeitig als ein zumindest einen der besagten Kanäle begrenzendes Element, wobei wo erforderlich selbstverständlich geeignete Dichtungen vorzusehen sind, um ein unerwünschtes Austreten (Leckage) eines Fluids oder ein Vermischen eines in einem Kanal geführten Fluids mit einem anderen im Brennstoffzellensystem geführten Fluid oder dgl. zu vermeiden. Hierdurch verringert sich die Anzahl der benötigten Bauelemente, und es vereinfacht sich die Herstellung eines solchen Brennstoffzellensystems.

Vorzugsweise dient ein erfindungsgemäß geschaffener Kanal zur Führung eines Kühlmittels für die Einzelbrennstoffzellen. Indem deren Bipolarplatte(n) mit einem Endabschnitt teilweise in den Kühl-Kanal hineinragen, ergibt sich zumindest innerhalb des Kühlkanals ein signifikant gesteigerter Wärmeübergang zwischen dem im Kühlkanal (heran) geführten Kühlmittel und jeder in den Kühlkanal hineinragenden Bipolarplatte. Insbesondere wenn jede Bipolarplatte (jeder Einzel-Brennstoffzelle) in erfindungsgemäßer Weise gestaltet ist, kann gegebenenfalls auf eine Führung des Kühlmittels in den Ebenen der Bipolarplatten vollständig verzichtet werden. Aber auch wenn wie üblich das Kühlmittel vom Kühlkanal in die Ebenen der Bipolarplatten abgezweigt wird erfahren erfindungsgemäß gestaltete Bipolarplatten eine verstärkte Kühlung insbesondere dadurch, dass deren in den Kühlkanal hineinragender Abschnitt ein Strömungshindernis bildet, was einen gesteigerten Wärmeübergang zwischen dem Kühlfluid und der Bipolarplatte bewirkt. Wenn - wie bereits erwähnt - die weitere Kühlung in der Ebene der einzelnen Bipolarplatte nur durch Wärmeleitung erfolgt, so dass also in der Ebene der Bipolarplatten kein Kühlfluid geführt ist, so verringert sich die Bauhöhe eines erfindungsgemäßen Brennstoffzellenstacks gegenüber dem Stand der Technik signifikant und es werden damit auch weniger aufwändig geformte Bipolarplatten benötigt. Gesamthaft betrachtet stellt sich damit sogar ein geringerer Druckverlust im Kühlmittelkreislauf des Brennstoffzellensystems ein.

Die Patentansprüche 2 - 14 beinhalten vorteilhafte Weiterbildungen und Ausgestaltungen der soweit erläuterten vorliegenden Erfindung.

Es ist ein Brennstoffzellensystem mit mehreren zu einem Stapel zusammengefassten Einzelbrennstoffzellen mit Bipolarplatten vorgeschlagen, wobei der Stapel zwischen zwei Endplatten eingespannt und in einem Gehäuse untergebracht ist, welches ausgebildet ist, bei der Herstellung des Brennstoffzellensystems als Führung für die Stapelbildung zu fungieren. Hiermit übernimmt das Gehäuse des Brennstoffzellensystems oder Brennstoffzellen-Stacks, genauer zumindest eine von den Innenwänden des Gehäuses, welche Innenwand hierfür geeignet gestaltet ist, die Funktion der eingangs genannten Führungen beim Stapeln bzw. Zusammenbau der Stack-Einzelkomponenten. Die bislang üblichen Führungen, welche zum Stapeln der Brennstoffzellen temporär angebracht wurden, können damit entfallen, da hierfür das Gehäuse mitverwendet werden kann. Durch eine solche Gehäuse-Führung ist übrigens auch im Betrieb des Brennstoffzellensystems eine optimale Positionierung und Halterung der Einzel-Brennstoffzellen gewährleistet. Eine geeignete Gestaltung der jeweiligen GehäuseInnenwand kann sich bspw. durch in Stapel-Richtung verlaufende Sicken in dieser Wand auszeichnen, zwischen denen Elemente des Stacks und insbesondere auch die Bipolarplatten der Einzelbrennstoffzellen mit ihren Endabschnitt geführt werden bzw. sein können. Wenn die wie üblich auch hier vorhandenen Endplatten des Stapels innerhalb des Gehäuses vorgesehen sind, enthält das Gehäuse eine für sich abgeschlossene Einheit, nämlich den "Stack", der beispielsweise gesamthaft in das Gehäuse eingesetzt und aus dem Gehäuse entnommen werden kann. Alternativ können die Endplatten oder zumindest eine der Endplatten auch außerhalb des Gehäuses liegen, welches dann einen für diese Endplatte(n) geeignet ausgesparten Wandabschnitt aufweisen kann.

Nach einer besonders vorteilhaften Weiterbildung können in einem (einzigen) Gehäuse mehrere Stapel von Einzelbrennstoffzellen nebeneinander angeordnet sein. Hiermit ist insbesondere eine einfache Anpassung eines Brennstoffzellensystems an einen zur Verfügung stehenden Einbauraum, beispielsweise in einem Kraftfahrzeug, darstellbar.

Vorteilhafterweise können dabei erfindungsgemäß zwischen einer Gehäuse-Innenwand und den nebeneinander angeordneten Stacks gebildete Kanäle zusammenhängend für beide (oder mehrere) nebeneinander angeordnete Stacks wirksam sein. Ferner kann dann, wenn mehrere Stapel von Bipolarplatten in einem gemeinsamen Gehäuse angeordnet sind, zwischen zwei nebeneinander angeordneten Stapeln von Bipolarplatten ein Freiraum ausgebildet sein, der (abermals) einen nun "inneren" Kanal bildet, in welchen die Enden benachbarter Bipolarplatten zumindest teilweise hineinragen können. Auch durch bzw. über diesen Kanal kann jedes der bereits mehrfach genannten Medien, nämlich Kühlmittel, Reaktant, Reaktionsprodukt, geführt sein. Nach einer Weiterbildung kann insbesondere im Freiraum zwischen einander benachbarten Stacks eine Trennwand vorgesehen sein, wodurch das Strömungsprofil im besagten Freiraum positiv beeinflusst und eine elektrische Kontaktierung von benachbarten Bipolarplatten ausgeschlossen werden kann, so denn diese Trennwand nicht elektrisch leitend ist.

Eine entsprechende Trennwand kann aber auch in jedem anderen Freiraum, welcher erfindungsgemäß einen Kanal bildet, vorgesehen sein, wodurch dann zwei zueinander parallele Kanäle (durch sog. "Einzel-Freiräume") gebildet werden, in denen vorzugsweise verschiedene Medien, nämlich Kühlmittel einerseits und zumindest einer der Reaktanten oder Reaktionsprodukte andererseits, mittels geeignet angeordneter Dichtungen sicher voneinander getrennt, geführt sind. Wenngleich sich damit eine etwas aufwändigere Konstruktion ergibt, ist es auch hierbei möglich, dass die Bipolarplatten in jeden der parallelen Kanäle zumindest teilweise hineinragen, jedoch ist das letztgenannte Merkmal nicht obligatorisch.

Alternativ zur weiter o.g. Ausbildung mit innerhalb des Gehäuses liegenden Endplatten kann aber auch zumindest eine (dann vorzugsweise beide) der Endplatten des Stapels außerhalb des im Bereich der Endplatten ausgesparten Gehäuses liegen oder es kann die Endplatte quasi in der Ebene der Gehäusewand liegen und damit einen Teil der an dieser Stelle entsprechend ausgesparten Gehäusewand bilden. Dabei sollte der Kompressionsweg des Stacks beim Zusammenbau, die Höhen-Toleranzen insbesondere der Bipolarplatten sowie die thermische Ausdehnung des Stacks im Betrieb durch die Gehäusewand selbst oder eine andere geeignete Maßnahme kompensiert werden.

Ein erfindungsgemäßes Gehäuse kann aus einem oder mehreren Kunststoffen, vorzugsweise einem Polymer oder einem faserverstärkten, bspw. kohlefaserverstärkten Kunststoff bestehen und dabei bspw. in einem Ein- oder Mehrkomponentenspritzguss hergestellt werden. Ein solches Kunststoffgehäuse hat neben Gewichtsaspekten den wesentlichen Vorteil, dass kein elektrischer Kurzschluss zwischen den Einzelbrennstoffzellen über die Gehäusewand entstehen kann. Gleiches wird erzielt, wenn ein aus einem beliebigen Werkstoff bestehendes Gehäuse bzw. zumindest dessen dem Brennstoffzellen-Stapel zugewandte Wand mit einer geeigneten Beschichtung versehen ist. Auch indem zwischen den Enden einander benachbarter Bipolarplatten und/oder zwischen den Enden der Bipolarplatten und der diesen zugewandten GehäuseInnenwand isolierende Abstandshalter angeordnet sind, können Kurzschlüsse innerhalb eines Stacks sicher verhindert werden. Im Übrigen kann das Gehäuse bei einer geeigneten Auswahl eines hochisolierenden Materials auch als (eingangs genannte) Isolatorplatte fungieren.

Zwischen den Endplatten und den aufeinander gestapelten Einzelbrennstoffzellen ist üblicherweise ein Stromaufnehmer vorgesehen.

Dieser kann an einer Isolatorplatte anliegen, die vorteilhafterweise in einer Ausnehmung des Gehäuses angeordnet oder als Teil des erfindungsgemäßen Gehäuses ausgebildet sein kann. Zusätzlich oder alternativ kann zwischen dem Gehäuse und dem Stromaufnehmer bzw. der Endplatte eine isolierende Einlage, vorzugsweise aus einem Polymer angeordnet sein, welche weiterhin oder alternativ auch für eine homogene Druckverteilung auf die Bipolarplatten sorgen kann. Es empfiehlt sich, bei Einsatz einer separaten Isolatorplatte zwischen der Isolatorplatte und dem Gehäuse eine Dichtung geeignet anzuordnen, wobei vorteilhafterweise das Gehäuse und die Dichtung in einem einzigen Ein- oder Mehrkomponenten-Spritzgussverfahren hergestellt sein können. Alternativ kann eine Abdichtung auch über die Endplatten erfolgen.

Weitere Einzelheiten, Merkmale und Vorteile der Erfindung ergeben sich aus der nachfolgenden Beschreibung anhand der Zeichnungen. Es zeigen:
- Figur 1: eine schematische Ansicht eines Brennstoffzellensystems mit drei Stapeln von Bipolarplatten gemäß einer ersten Ausführungsform in Seitenansicht auf die mehreren Stapel von Einzel-Brennstoffzellen,
- Figur 2: eine schematische Ansicht eines Brennstoffzellensystems mit einem Stapel von Bipolarplatten gemäß einer zweiten Ausführungsform in Seitenansicht auf einen einzigen Stapel von Einzel-Brennstoffzellen,
- Figur 3: eine schematische Ansicht eines Brennstoffzellensystems mit einem Stapel von Bipolarplatten gemäß einer dritten Ausführungsform abermals in Seitenansicht auf den Stapel/Stack.

In den Figuren 4 - 6 sind mögliche weitere Ausführungsformen dargestellt, wobei abweichend von den vorhergehenden Figuren 1 -3 nun jeweils eine Aufsicht auf eine Bipolarplatte einer Einzel-Brennstoffzelle im Gehäuse angeordnet dargestellt ist. Dabei ist in

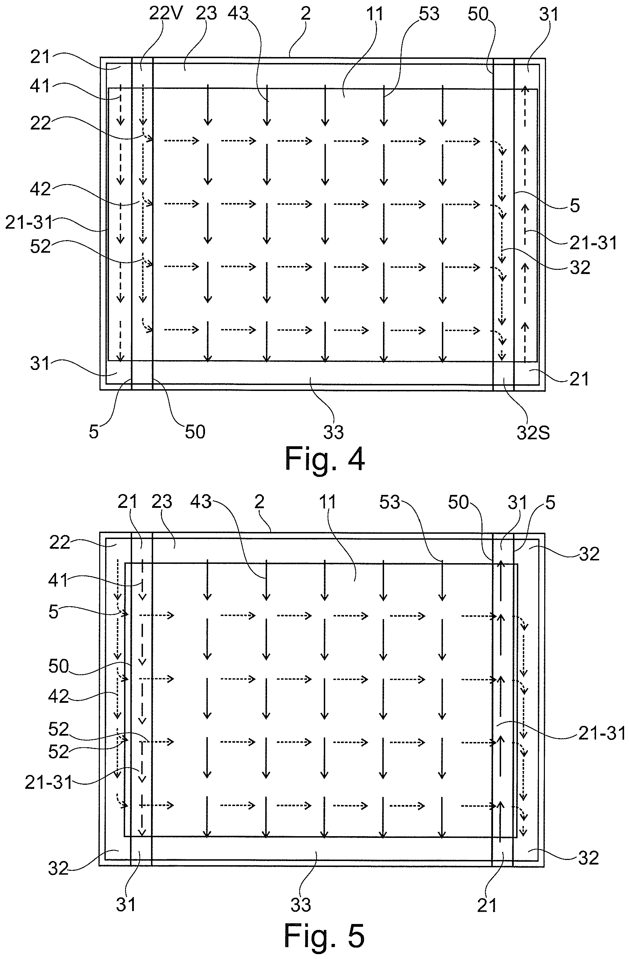

- Figur 4: eine Unterteilung eines äußeren Freiraums bzw. Kanals in zwei Kanäle für verschiedene darin geführte Medien gezeigt, wobei hier das Kühlmittel in einem äußeren Teil-Kanal geführt ist, während
- Figur 5: eine Weiterbildung von Figur 4 zeigt, und in

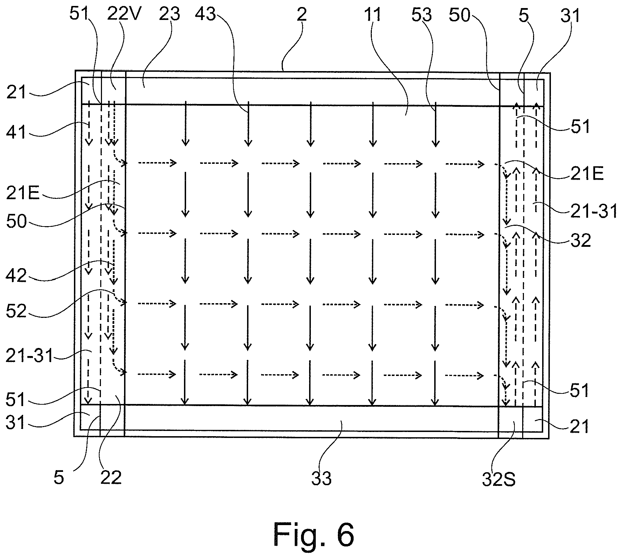

- Figur 6: eine Unterteilung des äußeren Freiraums bzw. Kanals in zwei Kanäle solchermaßen gezeigt ist, dass das Kühlmittel in einem inneren Teil-Kanal geführt ist.

In sämtlichen Figuren sind jeweils nur die hier interessierenden Teile des Brennstoffzellensystems dargestellt, alle übrigen Elemente sind der Übersichtlichkeit halber weggelassen.

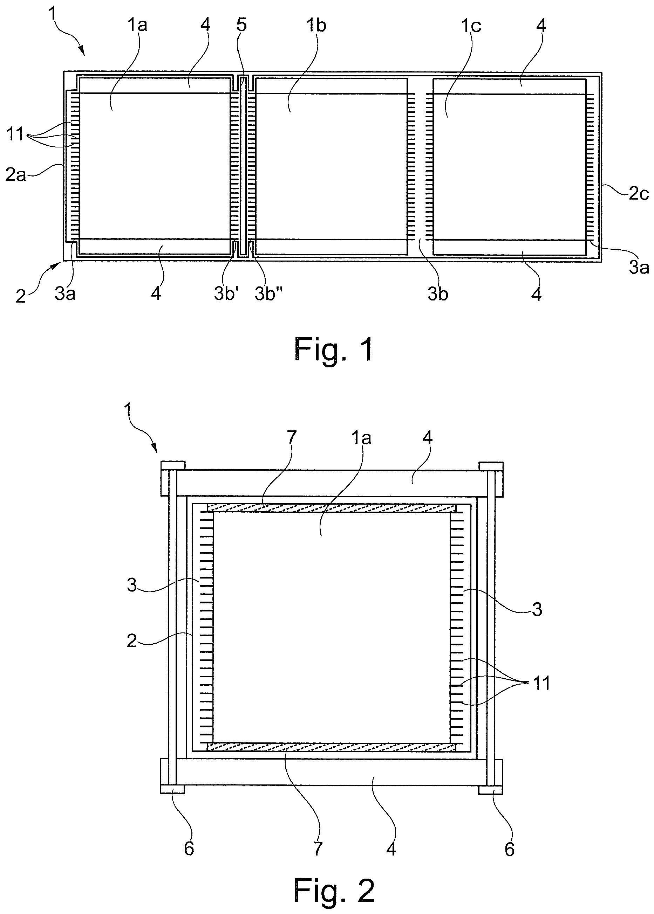

**Figur 1** zeigt eine erste Ausführungsform eines erfindungsgemäßen Brennstoffzellensystems 1. Dieses Brennstoffzellensystem 1 besteht aus drei Stacks bzw. Stapeln 1a, 1b und 1c von wie üblich Bipolarplatten 11 enthaltenden und in den Figurendarstellungen in Vertikalrichtung übereinander gestapelten Einzelbrennstoffzellen, von welchen Bipolarplatten 11 der Einfachheit halber lediglich Endabschnitte (auf diese ist die Bezugsziffer 11 gerichtet) dargestellt sind, die abweichend vom üblichen Stand der Technik über einander gegenüber liegende Seitenwände des jeweiligen und ansonsten (wie üblich) im wesentlichen quaderförmigen Stacks 1a bzw. 1b bzw. 1c hinausragen.

Hier (in Fig.1) sind nun diese drei Stacks 1a, 1b, 1c in Reihe nebeneinander angeordnet in einem einzigen und somit gemeinsamen Gehäuse 2 untergebracht. Auch dieses Gehäuse 2 besitzt im wesentlichen die Form eines Quaders.
Zwischen der Innenseite der in Figur 1 linksseitigen vertikalen Gehäusewand 2a und dem dieser benachbarten Stack 1a sowie zwischen der Innenseite der in Figur 1 rechtsseitigen vertikalen Gehäusewand 2c und dem dieser benachbarten Stack 1c sind Kanäle 3a ausgebildet, welche auch als äußere Kanäle 3a bezeichnet werden und in welche die Bipolarplatten 11 hier sämtlicher Einzel-Brennstoffzellen der Stacks 1a, 1c mit ihren figürlich dargestellten Endabschnitten (11) hineinragen.
Auch zwischen den jeweils einander zugewandten Innenseiten der einander benachbarten Stacks 1a und 1b bzw. 1b und 1c sind Kanäle 3b ausgebildet, welche auch als innere Kanäle 3b bezeichnet werden und in welche die Bipolarplatten 11 hier sämtlicher Einzel-Brennstoffzellen der Stacks 1a, 1b, 1c mit ihren figürlich dargestellten Endabschnitten (11) hineinragen.
Lediglich beispielhaft ist der zwischen dem innerhalb des Gehäuses 2 linksseitig liegenden Stapel 1a und dem mittleren Stapel 1b liegende innere Kanal 3b durch eine Trennwand 5 unterteilt, so dass hier ein erster dem Stapel 1a zugeordneter Kanal 3b' und ein zweiter dem Stapel 1b zugeordneter Kanal 3b" gebildet ist. Sinnvollerweise sind an einem erfindungsgemäßen Brennstoffzellensystem zumindest sämtliche inneren Kanäle 3b gleichartig gestaltet, jedoch sollen hier in Fig.1 die verschiedenen Möglichkeiten für die Darstellung von Kanälen 3 (3a, 3b, 3b', 3b") aufgezeigt werden.

Wenngleich vor der Figurenbeschreibung bereits erwähnt, sei an dieser nochmals gesagt, dass über die Kanäle 3 (3a, 3b, 3b', 3b") grundsätzlich jedes Medium, welches den Einzelbrennstoffzellen zugeführt bzw. von diesen abgeführt oder an diese heran oder von diesen weg geführt werden muss, in einem solchen Kanal 3 geführt werden kann. Neben einem Kühlmittel, welches jedenfalls für den in Fig.1 dargestellten Kanal 3b" das bevorzugte Medium ist, können somit auch die Reaktanten oder Reaktionsprodukte der Einzelbrennstoffzellen in diesen Kanälen 3 geführt sein. Selbstverständlich sind an den den Stacks abgewandten Grenzwänden der Kanäle 3, die insbesondere durch die Innenseiten der Wände des Gehäuses 2, aber auch durch eine oder mehrere geeignet (und somit auch andersartig als figürlich dargestellt) angeordnete Trennwand/Trennwände 5 gebildet sind, geeignete Dichtungsanordnungen vorzusehen, um eine gezielte Strömung des jeweiligen Mediums (Kühlmittel, Reaktant, Reaktionsprodukt) im jeweiligen Kanal 3 zu ermöglichen, ohne dass eine Vermischung mit dem in einem anderen Kanal 3 strömenden Medium erfolgt. Ferner sei ausdrücklich erwähnt, dass selbstverständlich nicht nur in den - unter Bezugnahme auf die Darstellung in Fig.1 - seitlich rechts bzw. links des jeweiligen Stacks 1a, 1b, 1c liegenden Freiräumen solche Kanäle 3 vorgesehen sein können, sondern weitere Kanäle (3) in den vor und/oder hinter den jeweiligen Stacks 1a, 1b, 1c liegenden Freiräumen gegenüber den dortigen parallel zur Zeichenebene liegenden Wänden des Gehäuses 2 vorgesehen sein können.
Jeder Stapel 1a, 1b, 1c von Bipolarplatten ist an seinen beiden Enden mit einer im wesentlichen üblichen Endplatte 4 versehen, welche gemäß der Ausführungsform nach Figur 1 innerhalb des Gehäuses 2 angeordnet ist.

In der **Figur 2** ist eine andere Ausführungsform des erfindungsgemäßen Brennstoffzellensystems 1 zu sehen, wobei hier jedenfalls in der dargestellten Schnittebene nicht mehrere Stacks nebeneinander angeordnet sind. Die Ausführungsform nach Fig.2 unterscheidet sich von der Ausführungsform nach Fig. 1 im Wesentlichen dadurch, dass hier das Gehäuse 2 innerhalb der Endplatten 4 liegt, während es bei der Ausführungsform nach Figur 1 außerhalb der Endplatten 4 vorgesehen ist, bzw. bei Fig.1 umschließt das Gehäuse 2 die kompletten Stacks 1a, 1b, 1c einschließlich deren Endplatten 4, während bei der Ausführungsform nach Fig.2 das Gehäuse 2 die Einzelbrennstoffzellen mit ihren Bipolarplatten 11 umschließt, während die Endplatten 4 in Stapelrichtung der Einzelbrennstoffzellen betrachtet oberhalb und unterhalb des Gehäuses 2 außerhalb desselben vorgesehen sind. Weiterhin ist in Figur 2 zu erkennen, dass die beiden Endplatten 4, zwischen denen der Stapel 1a von Einzelbrennstoffzellen mit Bipolarplatten 11 innerhalb des Gehäuses 2 liegend angeordnet ist, über eine Verschraubung 6 miteinander verbunden bzw. gegeneinander verspannt sind. Ferner ist hier am unteren und oberen Ende des Stacks 1 innerhalb des Gehäuses 2 liegend jeweils ein selbstverständlich auch beim Ausführungsbeispiel nach Fig.1 vorhandener, dort jedoch nicht gezeigter Stromaufnehmer 7 dargestellt. Jedenfalls bei dieser Ausführungsform ist das Gehäuse 2 aus einem Material gefertigt, mit welchem das Gehäuse 2 auch die Funktion einer Isolatorplatte übernehmen kann.

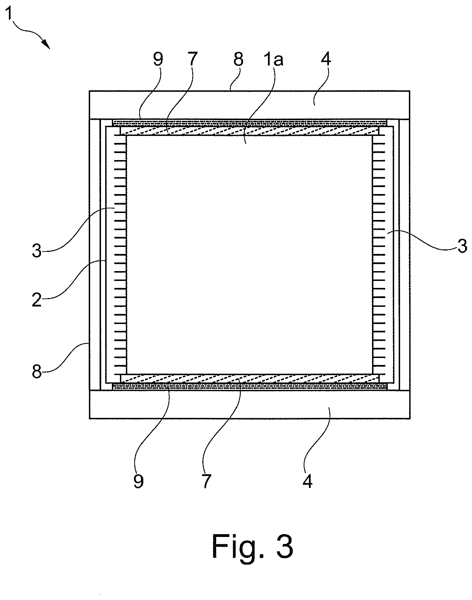

In **Figur 3** ist eine weitere Ausführungsform des erfindungsgemäßen Brennstoffzellensystems 1 dargestellt, bei der das Gehäuse 2 ebenfalls innerhalb der Endplatten 4 angeordnet ist. Der Unterschied zur Ausführungsform nach Figur 2 besteht u.a. darin, dass gemäß Figur 3 die beiden Endplatten 4, zwischen denen ein Stapel 1a von Einzelbrennstoffzellen mit Bipolarplatten 11 angeordnet ist, durch einen umlaufenden Spanngurt 8 zusammengehalten sind. Darüber hinaus ist gemäß Figur 3 das Gehäuse 2 an seinen den Endplatten 4 zugewandten Seiten jeweils mit einer Ausnehmung versehen, in welcher eine Isolatorplatte 9 angeordnet ist, die zwischen dem Stromaufnehmer 7 und der Endplatte 4 liegt und somit einen Teil des Gehäuses 2 bildet. Dabei können das Gehäuse 2 und die Isolatorplatte 9 gemeinsam in einem Ein- oder Mehrkomponenten-Spritzgussverfahren hergestellt sein. Darüber hinaus kann zwischen dem Gehäuse 2 bzw. der Isolatorplatte 9 und dem Stromaufnehmer 7 eine Einlage, vorzugsweise aus einem Polymer (beispielsweise zur Erzielung einer gleichmäßigen Druckverteilung auf den Stack) angeordnet sein. Selbstverständlich können auch bei dem in den Figuren 2 bzw. 3 dargestellten Ausführungsbeispiel mehrere Stapel (1a, 1b, 1c ... - nicht gezeigt) von Einzelbrennstoffzellen mit Bipolarplatten in einem gemeinsamen Gehäuse 2 angeordnet sein.

Figürlich nicht dargestellt sind in sämtlichen Ausführungsbeispielen vorzugsweise an beiden Seiten des Gehäuses 2 vorgesehene Zu- und Ableitungen für die in den Kanälen 3 geführten Medien, bspw. für das Kühlmittel, welche Leitungen bevorzugt auf einer oder beiden Seiten als abnehmbarer Deckel mit einer Dichtung ausgebildet sein können. Dadurch können Wartungsarbeiten und der Zusammenbau optimiert werden. Die Zu- bzw. Ableitungen für die Kühlkanäle 3 können alternativ aber auch in den Endplatten 4 angeordnet sein oder durch das Gehäuse 2 selbst erfolgen.

Mit der soweit geschilderten erfindungsgemäßen Ausgestaltung eines Brennstoffzellensystems 1 ist zwar nicht auszuschließen, dass im Falle einer Beschädigung des Gehäuses 2 bspw. im Falle eines schweren Unfalls eines Kraftfahrzeugs, in welchem das Brennstoffzellensystem 1 verbaut ist, das im jeweiligen Kanal 3 geführte Kühlmittel verloren geht, jedoch ist dies eigentlich unproblematisch. Wesentlich vorteilhafter ist demgegenüber, dass die im Gehäuse 2 vorhandene Kühlflüssigkeit auch als eine mechanische Dämpfung der Stapel 1a, 1b, 1c des Brennstoffzellensystems 1 im Falle von Schwingungen wirken kann.

Die im weiteren erläuterten **Figuren 4 - 6** zeigen in einer anderen Ansicht weitere mögliche Ausführungsformen für ein sog. aktives Gehäuse 2 eines Brennstoffzellensystems, welches neben der Aufnahme zumindest eines Stapels von Einzel-Brennstoffzellen eine weitere Funktion, nämlich die Bildung bzw. Begrenzung eines Kanals für einen der Reaktanden oder eines Reaktionsprodukts oder eines Kühlmittels übernimmt. Die Figuren 4 - 6 zeigen dabei eine Aufsicht auf eine in einem Gehäuse 2 angeordnete Bipolarplatte 11 einer Einzelbrennstoffzelle als Bestandteil eines Brennstoffzellen-Stacks. In Betrachtungsrichtung, d.h. senkrecht zur Zeichenebene sind eine Vielzahl solcher Bipolarplatten 11 einer Vielzahl von Einzelbrennstoffzellen übereinander gestapelt, um einen Stapel (Stack) 1a (bzw. 1b bzw. 1c) zu bilden. Diese Bipolarplatte(n) 11 sind solchermaßen innerhalb des Gehäuses 2 angeordnet, dass zwischen deren Rändern und den Innenseiten der Wände des Gehäuses Kanäle gebildet sind, die in diesen Figuren 4 - 6 mit den Bezugsziffern 21, 22, 23, 31, 32, 33 gekennzeichnet sind. Über diese Kanäle 21, 22, 23, 31, 32, 33 werden Fluide an die Bipolarplatten 11 herangeführt bzw. von diesen auch wieder weg geführt und es können sich zumindest einige der Fluide zwischen dem jeweiligen Zufuhr-Bereich ("heran geführt") und dem jeweiligen Abfuhr-Bereich ("weg geführt") gemäß den dargestellten Pfeilen über der jeweiligen Bipolarplatte 11 verteilen. Pfeile, welche in durchgezogenen Linien dargestellt sind, verdeutlichen dabei eine Fluid-Strömung oberhalb der figürlich dargestellten Bipolarplatte 11 (d.h. in Betrachtungsrichtung auf der Oberseite derselben), während gestrichelt dargestellte Pfeile eine unterhalb der figürlich dargestellte Bipolarplatte 11 anzutreffende Fluid-Strömung (in Betrachtungsrichtung an der Unterseite dieser Bipolarplatte 11) verdeutlichen.

Weiterhin ist sämtlichen Ausführungsbeispielen der Figuren 4 - 6 gemein, dass die genannten Kanäle 21, 22, 23, 31, 32, 33 zur Führung von Fluiden, soweit sie aneinander grenzen, durch eine Trennwand 5, 50 gegen einander abgegrenzt bzw. durch eine Trennwand 5, 50 unterteilt sind, wobei an einigen Stellen solcher Trennwände 5, 50 auch Durchbrechungen 51, 52 für einen Fluid-Durchtritt oder Übertritt vorgesehen sein können, auf welche Durchbrechungen (51, 52) in der detaillierten Beschreibung der jeweiligen Figur noch näher eingegangen wird.

Bei jedem der Ausführungsbeispiele der Figuren 4 - 6 wird über den Kanal 23 Frischluft an die jeweiligen Einzelbrennstoffzellen bzw. deren Bipolarplatten 11 herangeführt und es wird über den Kanal 33 das Reaktionsprodukt in Form von mit Wasser versetzter Luft von den Bipolarplatten 11 abgeführt. Auf der Oberseite der jeweiligen Bipolarplatte 11 strömt die Luft dabei gemäß den in durchgezogenen Linie dargestellten Pfeilen in den Figurendarstellungen vertikal von oben nach unten, wobei die stellvertretend dargestellte Bezugsziffer 53 den Medien-Übergang vom Luft-Zufuhrkanal 23 auf die Oberseite der Bipolarplatte 11 verdeutlicht.

Nun auf **Figur 4** Bezug nehmend wird über den Kanal 22 Wasserstoff an die Unterseite der Bipolarplatte 11 herangeführt, wobei sich dieser Kanal 22 als Verteiler-Kanal 22V nicht nur abseits der Bipolarplatte in Vertikalrichtung bezüglich des Gehäuses und somit senkrecht zur Zeichenebene erstreckt, sondern sich unterhalb jeder Bipolarplatte 11 auch entlang dieser (in der Figurendarstellung von oben nach unten) erstreckt. Dabei ist mit der Bezugsziffer 42 in Form eines gestrichelten und somit unterhalb der Bipolarplatte 1 liegenden Pfeils der in der Figurendarstellung vertikal von oben nach unten gerichtete WasserstoffStrom im Kanal 22 gekennzeichnet, von welchem aus die übliche Aufteilung in mehrere in der Figurendarstellung horizontal von links nach rechts über der Fläche der Bipolarplatte 11 verteilt entlang von deren Unterseite strömende Wasserstoff-Teilströme abgehen. In der Figurendarstellung rechtsseitig der Bipolarplatte 11 gelangen die Reste der jeweiligen Wasserstoff-Teilströme schließlich in einen Wasserstoff-Abführungskanal 32, der sich sowohl in der Figurendarstellung entlang der Unterseite der Bipolarplatte von oben nach unten erstreckt als auch abseits der Bipolarplatte als Sammel-Kanal 32S in Vertikalrichtung des Gehäuses, d.h. senkrecht zur Zeichenebene erstreckt. Eine Trennwand 50 bzw. geeignet angeordnete Dichtungen, welche als Trennwand 50 fungieren, trennen den Wasserstoff-Zuführungskanal 22 und 22V und den Wasserstoff-Abführungskanal 32 und 32S dabei vom Luft-Zufuhrkanal 23 bzw. vom Luft-Reaktionsprodukt-Abfuhrkanal 33. Weiterhin kann die Trennwand 50 in Form geeignet angeordneter Dichtungen auch für die gewünschte Aufteilung des Wasserstoff-Stroms 42 auf die in der Figurendarstellung horizontal orientierten Wasserstoff-Teilströme sorgen, indem in dieser Trennwand 50 bzw. zwischen geeignet angeordneten Dichtungen, welche diese Trennwand 50 bilden, Durchbrüche 52 vorgesehen sind, durch welche Wasserstoff vom Strom 42 in die in der Figur horizontal orientierten Wasserstoff-Teilströme abzweigt. Diese letztgenannten Dichtungen zwischen übereinander angeordneten Bipolarplatten 11 dienen im Übrigen auch zur gegenseitigen Abstützung der übereinander angeordneten Bipolarplatten 11.

Zwei weitere Trennwände 5 sind vorgesehen, um neben dem Wasserstoff-Zuführungskanal 22 oder neben dem Wasserstoff-Abführungskanal 32 jeweils einen Kühlmittelkanal 21-31 zu schaffen, der sich entlang der Oberseite und/oder entlang der Unterseite der Bipolarpaltte 11 zwischen einem sich innerhalb des Gehäuses vertikal, d.h. senkrecht zur Zeichenebene in einander diagonal gegenüberliegenden Eckbereichen desselben erstreckenden Kühlmittel-Zufuhrkanal 21 und einem sich ebenfalls innerhalb des Gehäuses vertikal, d.h. senkrecht zur Zeichenebene in den beiden anderen einander diagonal gegenüberliegenden Eckbereichen desselben erstreckenden Kühlmittel-Abfuhrkanal 31 erstrecken. Sämtliche dieser letztgenannten Kühlmittel-Kanäle sind dabei von der Trennwand 5 und der dieser benachbarten Gehäusewand begrenzt.

**Figur 6** zeigt eine Abwandlung des Ausführungsbeispiels von Figur 4, bei welcher ausgenutzt ist, dass sich der unterhalb und entlang der Oberfläche der Bipolarplatte 11 verlaufende Wasserstoff-Zuführungskanal 22 zur Verteilung von Wasserstoff tatsächlich nur unterhalb der Bipolarplatte 11 befindet, so dass oberhalb dieses Kanals 22 auf der Oberseite der Bipolarplatte 11 eigentlich Raum für einen weiteren Kanal zur Verfügung steht. Entsprechendes gilt auf der Abströmseite von Wasserstoff, d.h. bezüglich des Wasserstoff-Abführungskanals 32, oberhalb dessen ebenfalls Freiraum für einen Kanal vorliegt. Diese beiden genannte Freiräume sind hier "Ergänzungskanal 21E" für Kühlmittel genutzt, welches vom Kühlmittelstrom 41 über in der Trennwand 5 am Anfang und am Ende der Bipolarplatte vorgesehene Übertrittsöffnungen 51 abzweigt bzw. wieder zugeführt wird. Verdeutlicht ist dies durch weitere Strömungs-Pfeile 41 für den Kühlmittelstrom.

Beim Ausführungsbeispiel nach **Figur 5** ist der Aufbau der in der Figurendarstellung links und rechts seitlich bzw. im Randbereich der Bipolarplatte 11 verlaufenden Kanäle vergleichbar der Ausführungsform nach Figur 4, jedoch mit dem Unterschied, dass hier die weiter außen und somit neben der Wand 5 direkt von der Gehäusewand begrenzten Kanäle der Wasserstoff-Zuführungskanal 22 sowie der Wasserstoff-Abführungskanal 32 sind, welche unterhallb der dargestellten Bipolarplatte 11 mit den in der Figurendarstellung horizontal verlaufenden Teilströmen gemäß den gestrichelten Pfeilen des an die Bipolarplatte 11 herangeführten Wasserstoffs verbunden sind. Die senkrecht zur Zeichenebene verlaufenden Kühlmittelkanäle 21 und 31 sowie die zwischen diesen beiden auf der in der Figurendarstellung sichtbaren Oberfläche der (jeweiligen) Bipolarplatte 11 in der Figur von oben nach unten verlaufenden Kühlmittelkanäle 21-31befinden sich hier zwischen den beiden Trennwänden 5 und 50 und somit auf der der benachbarten Gehäusewand abgewandten Seite der Trennwand 5.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung, der durch die Ansprüche definiert ist, zu verlassen.

## Patentansprüche

1. Brennstoffzellensystem (1) mit mehreren zu einem Stapel (1a, 1b, 1c) zusammengefassten Einzelbrennstoffzellen mit Bipolarplatten (11) und abseits der chemisch aktiven Flächen der Einzelbrennstoffzellen vorgesehenen Kanälen (3, 22, 23, 32, 33) für die Zuführung der Reaktanten und Abführung der Reaktionsprodukte zu/von den Einzelbrennstoffzellen sowie mit einem ein Kühlfluid für die Einzelbrennstoffzellen führenden Kühlkanal (3, 21, 31), wobei der Stapel in einem Gehäuse (2) untergebracht ist, wobei zwischen dem Gehäuse (2) und dem Stapel (1a, 1b, 1c) ein Freiraum ausgebildet ist, der einen äußeren Kanal (3, 21, 22, 23, 31, 32, 33) für zumindest einen der Reaktanten oder das Kühlmittel bildet, in welchen Bipolarplatten (11) mit einem Endabschnitt hineinragen,
dass in verschiedenen in Einzel-Freiräume unterteilten Freiräume zwischen dem Gehäuse (2) und dem Stapel (1a, 1b, 1c) verschiedene Medien, nämlich Kühlmittel und zumindest einer der Reaktanten oder Reaktionsprodukte, geführt sind; **dadurch gekennzeichnet, dass** die Freiräume durch eine Trennwand (5, 50) in Einzel-Freiräume unterteilt sind, und dass sich die Trennwand (5, 50) von einer Gehäusewand des Gehäuses (2) zu einer gegenüberliegenden Gehäusewand des Gehäuses (2) erstreckt.

2. Brennstoffzellensystem nach Anspruch 1, wobei sich jede Trennwand (5,50) von der Gehäusewand zu der gegenüberliegenden Gehäusewand erstreckt.

3. Brennstoffzellensystem nach einem der vorherigen Ansprüche, wobei die Einzel-Freiräume zueinander parallele Kanäle sind, in denen verschiedene Medien geführt sind.

4. Brennstoffzellensystem nach einem der vorherigen Ansprüche, wobei die Bipolarplatten (11) solchermaßen innerhalb des Gehäuses (2) angeordnet sind, dass zwischen deren Rändern und den Innenseiten der Wände des Gehäuses (2) Kanäle gebildet sind.

5. Brennstoffzellensystem nach einem der vorherigen Ansprüche 2 bis 4, wobei der Kühlkanal (3, 21, 31) und der vorgesehene Kanal (3, 22, 23, 32, 33) parallel zueinander und parallel zur Bipolarplattenebene angeordnet sind.

6. Brennstoffzellensystem nach Anspruch 5, wobei der zumindest einer der Reaktanten oder Reaktionsprodukte führende Kanal zwischen dem Kühlmittel-Kanal (21, 31) und der chemisch aktiven Flächen ausgebildet ist.

7. Brennstoffzellensystem nach einem der vorherigen Ansprüche 1 bis 4, wobei die von der Gehäusewand begrenzten Kanäle einer der Reaktanten oder Reaktionsprodukte führende Kanäle sind.

8. Brennstoffzellensystem nach Anspruch 7, wobei der Kühlmittel-Kanal (21, 31) zwischen dem zumindest einer der Reaktanten oder Reaktionsprodukte führende Kanal und der chemisch aktiven Flächen ausgebildet ist.

9. Brennstoffzellensystem nach einem der vorherigen Ansprüche 3 bis 8, wobei die Bipolarplatte (11) zwei verschiedene Kanäle voneinander trennt, wobei ein Kanal auf einer Unterseite verläuft und ein Kanal auf einer Oberseite der Bipolarplatte (11) verläuft.

10. Brennstoffzellensystem nach einem der vorherigen Ansprüche, **dadurch gekennzeichnet, dass** zumindest eine der Endplatten (4) des Stapels (1a, 1b, 1c) außerhalb des im Bereich der Endplatten (4) ausgesparten Gehäuses (2) liegt oder einen Teil der entsprechend ausgesparten Gehäusewand beschreibt.

11. Brennstoffzellensystem nach einem der vorhergehenden Ansprüche, **dadurch gekennzeichnet, dass** das Gehäuse (2) aus vorzugsweise faserverstärktem Kunststoff besteht.

12. Brennstoffzellensystem nach einem der vorherigen Ansprüchen, **dadurch gekennzeichnet, dass** zwischen den Enden benachbarter Bipolarplatten (11) isolierende Abstandshalter und/oder Dichtungen angeordnet sind, welche eine Trennwand (5, 50) bilden.

13. Brennstoffzellensystem nach einem der vorhergehenden Ansprüche, **dadurch gekennzeichnet, dass** das Gehäuse (2) als Isolatorplatte fungiert und hierfür eine geeignete Beschichtung aufweist, und/oder mit einem Stromaufnehmer (7), der an einer Isolatorplatte (9) anliegt, welche in einer Ausnehmung des Gehäuses (2) angeordnet oder als Teil des Gehäuses (2) ausgebildet ist.

14. Brennstoffzellensystem nach einem der vorhergehenden Ansprüche, **dadurch gekennzeichnet, dass** zwischen dem Gehäuse (2) und einem Stromaufnehmer (7) oder einer Endplatte (4) eine vorzugsweise in Kunststoff ausgeführte Einlage angeordnet ist, und/oder
wobei der Stapel (1a, 1b, 1c) zwischen zwei Endplatten (4) gelagert und in einem Gehäuse (2) untergebracht ist, welches ausgebildet ist, bei der Herstellung des Brennstoffzellensystems (1) als Führung für die Stapelbildung zu fungieren.

## Claims

1. A fuel cell system (1) comprising a plurality of individual fuel cells, which are combined to form a stack (1a, 1b, 1c), with bipolar plates (11) and channels (3, 22, 23, 32, 33) provided apart from the chemically active surfaces of the individual fuel cells for the supply of the reactants and the discharge of the reaction products to/from the individual fuel cells, and with a cooling channel (3, 21, 31) carrying a cooling fluid for the individual fuel cells, wherein the stack is accommodated in a housing (2), wherein a free space is formed between the housing (2) and the stack (1a, 1b, 1c), which free space forms an outer channel (3, 21, 22, 23, 31, 32, 33) for at least one of the reactants or the coolant, into which bipolar plates (11) protrude with an end portion thereof,
and wherein various media, specifically coolant and at least one of the reactants or reaction products, are guided into various free spaces divided into individual free spaces between the housing (2) and the stack (1a, 1b, 1c);
**characterised in that** the free spaces are divided into individual free spaces by a partition wall (5, 50), and **in that** the partition wall (5, 50) extends from one housing wall of the housing (2) to an opposite housing wall of the housing (2).

2. A fuel cell system according to claim 1, wherein each partition wall (5, 50) extends from the housing wall to the opposite housing wall.

3. A fuel cell system according to either one of the preceding claims, wherein the individual free spaces are channels parallel to one another, in which various media are guided.

4. A fuel cell system according to any one of the preceding claims, wherein the bipolar plates (11) are arranged within the housing (2) in such a way that channels are formed between the edges thereof and the inner sides of the walls of the housing (2).

5. A fuel cell system according to any one of preceding claims 2 to 4, wherein the cooling channel (3, 21, 31) and the provided channel (3, 22, 23, 32, 33) are arranged parallel to one another and parallel to the bipolar plate plane.

6. A fuel cell system according to claim 5, wherein the channel guiding at least one of the reactants or reaction products is formed between the cooling channel (21, 31) and the chemically active surfaces.

7. A fuel cell system according to any one of claims 1 to 4, wherein the channels delimited by the housing wall are channels guiding one of the reactants or reaction products.

8. A fuel cell system according to claim 7, wherein the coolant channel (21, 31) is formed between the channel guiding at least one of the reactants or reaction products and the chemically active surfaces.

9. A fuel cell system according to any one of preceding claims 3 to 8, wherein the bipolar plate (11) separates two different channels from one another, wherein one channel runs on an underside and one channel runs on an upper side of the bipolar plate (11).

10. A fuel cell system according to any one of the preceding claims, **characterised in that** at least one of the end plates (4) of the stack (1a, 1b, 1c) lies outside the housing (2) recessed in the region of the end plates (4) or describes part of the corresponding recessed housing wall.

11. A fuel cell system according to any one of the preceding claims, **characterised in that** the housing (2) comprises preferably fibre-reinforced plastic.

12. A fuel cell system according to any one of the preceding claims, **characterised in that** insulating spacers and/or seals, which form a partition wall (5, 50), are arranged between the ends of adjacent bipolar plates (11).

13. A fuel cell system according to any one of the preceding claims, **characterised in that** the housing (2) functions as an insulation plate and for this purpose has a suitable coating, and/or is formed with a current pick-up (7), which rests against an insulation plate (9), which is arranged in a recess of the housing (2) or is formed as part of the housing (2).

14. A fuel cell system according to any one of the preceding claims, **characterised in that** an insert preferably made of plastic is arranged between the housing (2) and a current pick-up (7) or an end plate (4), and/or
wherein the stack (1a, 1b, 1c) is mounted between two end plates (4) and is accommodated in a housing (2) which is designed to function as a guide for forming the stack during the production of the fuel cell system (1).

## Revendications

1. Système de piles à combustible (1) comprenant plusieurs piles à combustible individuelles rassemblées en un empilement (1a, 1b, 1c), des plaques bipolaires (11) et des canaux (3, 22, 23, 32, 33) prévus à l'écart des surfaces chimiquement actives des piles à combustible individuelles pour l'introduction des réactifs et l'évacuation des produits réactionnels vers les piles à combustible individuelles ou à la sortie de celle-ci, ainsi qu'un canal de refroidissement (3, 21, 31) transportant un fluide de refroidissement des piles à combustible individuelles, l'empilement étant logé dans un boîtier (2), entre le boîtier (2) et l'empilement (1a, 1b, 1c) étant formé un espace libre qui forme un canal externe (3, 21, 22, 23, 31, 32, 33) pour au moins l'un des réactifs ou le fluide de refroidissement, dans lequel pénètrent des plaques bipolaires (11) par un segment d'extrémité,
dans différents espaces libres subdivisés en espaces libres individuels entre le boîtier (2) et l'empilement (1a, 1b, 1c), passant différents fluides, à savoir un fluide de refroidissement et au moins l'un des réactifs et/ou produits réactionnels,
**caractérisé en ce que**
les espaces libres sont subdivisés par une paroi de séparation (5, 50) en des espaces libres individuels, et la paroi de séparation (5, 50) s'étend d'une paroi du boîtier (2) vers une paroi opposée de ce boîtier (2).

2. Système de piles à combustible conforme à la revendication 1,
dans lequel chaque paroi de séparation (5, 50) s'étend de la paroi du boîtier à la paroi opposée du boîtier.

3. Système de piles à combustible conforme à l'une des revendications précédentes,
dans lequel les espaces libres individuels sont des canaux parallèles dans lesquels passent différents fluides.

4. Système de piles à combustible conforme à l'une des revendications précédentes,
dans lequel les plaques bipolaires (11) sont montées à la partie interne du boîtier (2) de sorte que, des canaux soient formés entre leurs bords et les faces internes des parois du boîtier (2).

5. Système de piles à combustible conforme à l'une des revendications précédentes 2 à 4,
dans lequel le canal de refroidissement (3, 21, 31) et le canal (3, 22, 23, 32, 33) sont parallèles et parallèles au plan des plaques bipolaires.

6. Système de piles à combustible conforme à la revendication 5,
dans lequel le canal dans lequel passe au moins l'un des réactifs ou produits réactionnels est formé entre le canal de fluide de refroidissement (21, 31) et les surfaces chimiquement actives.

7. Système de piles à combustible conforme à l'une des revendications précédentes 1 à 4,
dans lequel les canaux limités par la paroi du boîtier sont des canaux transportant les réactifs ou les produits réactionnels.

8. Système de piles à combustible conforme à la revendication 7,
dans lequel le canal de fluide de refroidissement (21, 31) est formé entre le canal dans lequel passe au moins l'un des réactifs ou produits réactionnels et les surfaces chimiquement actives.

9. Système de piles à combustible conforme à l'une des revendications précédentes 3 à 8,
dans lequel la plaque bipolaire (11) sépare deux canaux différents, un canal s'étendant sur la face inférieure de la plaque bipolaire (11) et un canal s'étendant sur la face supérieure de celle-ci.

10. Système de piles à combustible conforme à l'une des revendications précédentes,
**caractérisé en ce qu'**
au moins l'une des plaques d'extrémité (4) de l'empilement (1a, 1b, 1c) est située à l'extérieur du boîtier (2) évidé dans la zone des plaques d'extrémité (4) ou définit une partie de la paroi de boîtier évidée de manière correspondante.

11. Système de piles à combustible conforme à l'une des revendications précédentes,
**caractérisé en ce que**
le boîtier (2) est réalisé en un matériau synthétique, de préférence renforcé par des fibres.

12. Système de piles à combustible conforme à l'une des revendications précédentes,
**caractérisé en ce qu'**
entre des extrémités de plaques bipolaires (11) voisines sont montés des éléments d'écartement isolants et/ou des joints d'étanchéité qui forment une paroi de séparation (5, 50).

13. Système de piles à combustible conforme à l'une des revendications précédentes,
**caractérisé en ce que**
le boîtier (2) fait office de plaque isolante et comporte à cet effet un revêtement adapté et/ou comporte un collecteur de flux (7) qui s'appuie sur une plaque isolante (9) qui est située dans un évidement du boîtier (2) ou est réalisée sous la forme d'une partie du boîtier (2).

14. Système de piles à combustible conforme à l'une des revendications précédentes,
**caractérisé en ce qu'**
entre le boîtier (2) et un élément collecteur de flux (7) ou une plaque d'extrémité (4) est montée une garniture de préférence réalisée en matériau synthétique et/ou
l'empilement (1a, 1b, 1c) est monté entre deux plaques d'extrémité (4) et logé dans un boîtier (2) qui est réalisé pour constituer lors de la fabrication du système de piles à combustible (1) un élément de guidage pour la formation de l'empilement.
